# EUROPEAN PATENT SPECIFICATION

(11) **EP 2 159 174 B1**
(45) Date of publication and mention of the grant of the patent: **20.06.2012**
(21) Application number: 09168562.8
(22) Date of filing: 25.08.2009
(51) Int. Cl.: B65G 47/84, B65G 47/82

(54) **An apparatus for transport and controlled discharge of products**
Vorrichtung zum Transport und gesteuerte Produktabgabe
Appareil pour le transport et l'élimination contrôlée de produits

(30) Priority: 26.08.2008 NL 2001922
(43) Date of publication of application: 03.03.2010
(73) Proprietor: Eurosort B.V., 1382 JX Weesp (NL)
(72) Inventor: Hopman, Jozef Walter Maria, 1272 NS, Huizen (NL); Balk, Wouter, 1396 JK, Baambrugge (NL)
(74) Representative: Zonneveld, Hendrik Jan

(56) References cited:
- EP-A- 1 020 380
- EP-A- 1 123 884
- CA-A1- 1 127 109
- DE-A1- 2 941 576
- DE-A1- 19 959 843
- US-A1- 2003 221 935

## Description

The invention relates to an apparatus for transport and controlled discharge of products, comprising at least a transport container for supporting a product, a loading station for receiving a product by the transport container, a discharging station for discharging a product from the transport container and driving means for transporting the transport container in a transporting direction from the loading station to the discharging station, wherein the transport container comprises a pushing member for pushing a product from the transport container when this is at the discharging station, which pushing member is displaceable transversely with respect to the transporting direction.

Such an apparatus is known from DE 199 59 843 which discloses the preamble of claim 1. The known apparatus comprises a pushing member on each of the transport containers for pushing a product from a supporting surface of the transport container. A disadvantage of the known apparatus is that it is rather inflexible for transporting products of varying sizes at a relatively high speed.

It is an object of the present invention to provide an apparatus which has increased transport capacity for varying product sizes.

In order to achieve this object the transport container comprises at least another pushing member for pushing a product from the transport container at the discharging station, wherein at least both pushing members are located behind each other as seen in the transporting direction as claimed in claim 1.

Due to these features a relatively large product can be supported by the transport container and discharged at the discharging station, for example by activating two adjacent pushing members at the same time, whereas in case of transporting relatively small products with respect to the size of the transport container more than one product can be supported by one transport container and discharged individually by activating one of the pushing members corresponding to one product. As a result, a large variation of product sizes can be handled in an efficient, way. If two products are supported by one transport container, one product can be discharged at a first discharging station by a first pushing member whereas another product can be discharged at a second discharging station by a second pushing member, for example.

In a preferred embodiment the pushing member comprises an actuator which is guidable along a guide extending obliquely with respect to the transporting direction. The guide may be straight or bended, for example, so as to influence the speed of movement of the pushing member. Preferably, at least two actuators of a transport container are located at substantially the same distance with respect to each other as two corresponding guides, as seen in the transporting direction, because this allows to displace two pushing members synchronously, which may be advantageous in case of discharging a relatively long product from the transport container.

The invention will hereafter be elucidated with reference to schematic drawings showing embodiments of the invention by way of example.
Fig. 1 is a plan view of an embodiment of the apparatus according to the invention.
Fig. 2a is an enlarged view of a part of Fig. 1 indicated by II, and Fig. 2b is a similar view as Fig. 2a, but showing the bottom side of a transport container.
Fig. 3a and 3b are similar views as Fig. 2a and 2b, respectively, but showing an alternative embodiment of the transport container.
Fig. 4a and 4b are similar views as Fig. 2a and 2b, respectively, but showing another alternative embodiment of the transport container.
Fig. 5 is an enlarged plan view of a part of the embodiment of Fig. 1 of which the transport containers are removed for clarity reasons.
Fig. 6a and 6b are similar views as Fig. 3a and 4a on a different scale, respectively, and illustrating the apparatus under operating conditions.
Fig. 7a is a plan view of the embodiment of Fig. 3a on a different scale and Fig. 7b is a bottom view of the corresponding part of the apparatus, illustrating the apparatus under operating conditions.
Fig. 8a and 8b are similar views as Fig. 7a and 7b, respectively, showing an alternative embodiment.

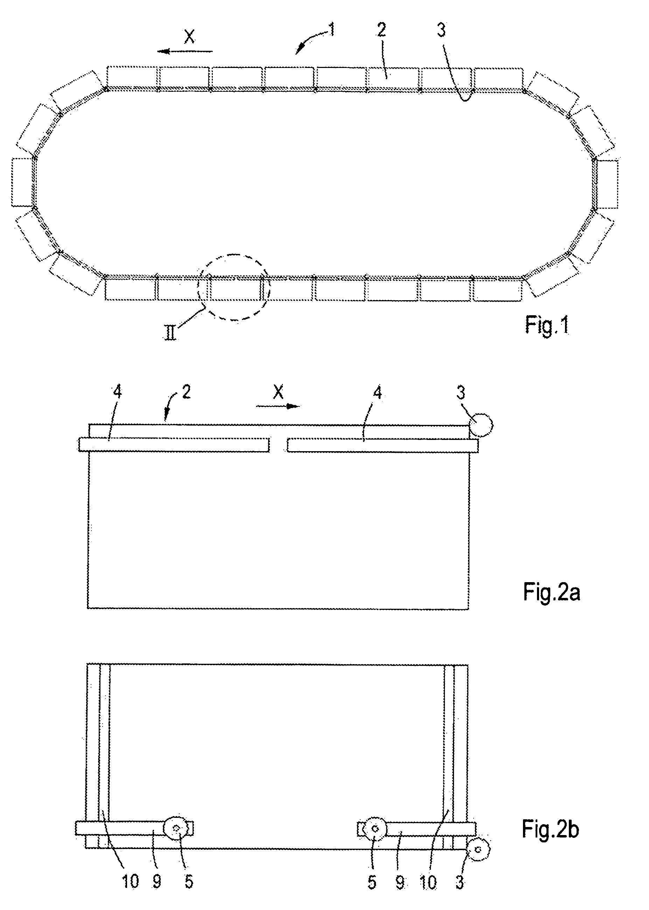

Fig. 1 shows an embodiment of the apparatus 1 according to the invention as seen from above. The embodiment comprises a plurality of transport containers 2 for supporting and transporting products. In this case the apparatus is arranged such that products can be placed on a supporting surface of the transport containers 2 at one or more loading stations (not shown). Furthermore, the apparatus 1 is provided with one or more discharging stations (not shown) at which products can be discharged. The transport containers 2 are coupled to each other and driven synchronously in a transporting direction X by driving means, for example a chain. In practice, the transport containers 2 may be coupled to each other indirectly, for example each of the transport containers 2 may be individually coupled to the driving means.

The products are transported from the loading station to the discharging station. The transport containers 2 are pivotable with respect to each other by means of pivot members 3 such that a track that they follow may comprise bends in a horizontal plane. Fig. 1 shows an endless track comprising two bends and two straight portions in a horizontal plane. It is also possible that the pivot members 3 are adapted such that the transport containers 2 are pivotable with respect to each other in a vertical plane such that a three-dimensional track can be followed.

The apparatus 1 is adapted to discharge products in a controlled way. The embodiment of the transport container 2 as shown in Fig. 2 comprises a discharging mechanism in the form of a pushing member 4 which is moveable transversely with respect to the transporting direction X. This allows to push a product from the transport container 2 at the desired discharging station to an exit (not shown).

The transport container 2 of Fig. 2 comprises two pushing members 4. The pushing members 4 are located behind each other as seen in the transporting direction X. When the transport container 2 supports one relatively short product as seen in the transporting direction X, located next to one of the pushing members, it is possible to activate only one pushing member 4. In case of a relatively long product both pushing members 4 can be activated, possibly synchronously. In case of more than one relatively small product disposed on one transport container 2 the pushing members 4 can be activated independently from each other. It is also possible that two or more products supported by one transport container 2 are discharged at different discharging stations.

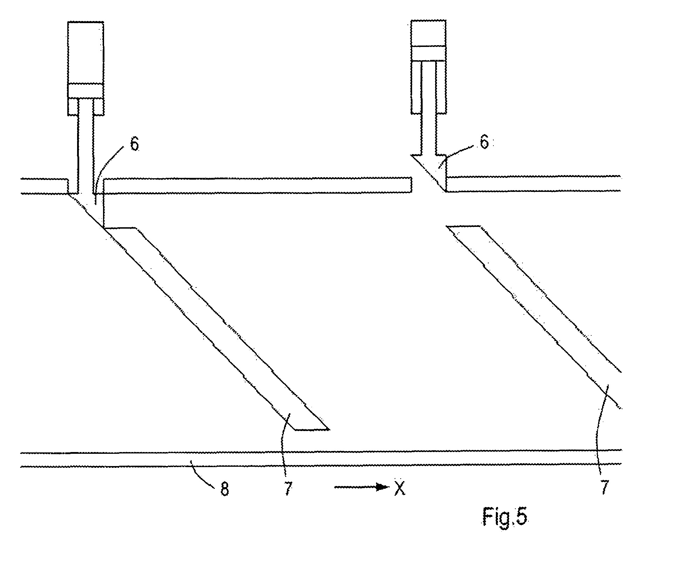

Fig. 2b shows the bottom side or the transport container 2 of Fig. 2a. The pushing member 4 is coupled via a transmission to an actuator in the form of an actuator wheel 5. Under operating conditions, when the transport container 2 moves in the transporting direction X the actuator wheel 5 may touch a guide actuator 6 such that the actuator wheel 5 must follow a guide 7. This is illustrated in Fig. 5. The guide 7 extends oblique with respect to the transporting direction X and may be fixed to a frame 8 of the apparatus 1. As shown in Fig. 5 the guide actuator 6 can have an activated position (see the position of the left guide actuator 6 in Fig. 5) and a de-activated position (see the position of the right guide actuator 6 in Fig. 5). In the de-activated position the transport container 2 including the pushing members 4 passes the guide actuator 6 without being activated, which means that a product is not pushed from the transport container 2. In the activated position the actuator wheel 5 is guided along the guide actuator 6 and the guide 7 thereby moving the corresponding pushing member 4 transversely with respect to the transporting direction X. At an end portion of the guide 7 there is a space between the guide 7 and the frame 8 through which the actuator wheel 5 can move when the transport container 2 passes. As a consequence, the actuator wheel 5 looses contact with the guide 7 and can be moved back to its original position.

As shown in Fig. 2b the actuator wheel 5 is rotatably mounted to a wheel support 9 which is movable within a slot 10, on the one hand, and connected to the pushing member 4, on the other hand. Moving the actuator wheel 5 transversely with respect to the transporting direction leads to moving the pushing member 4 in transverse direction, as well.

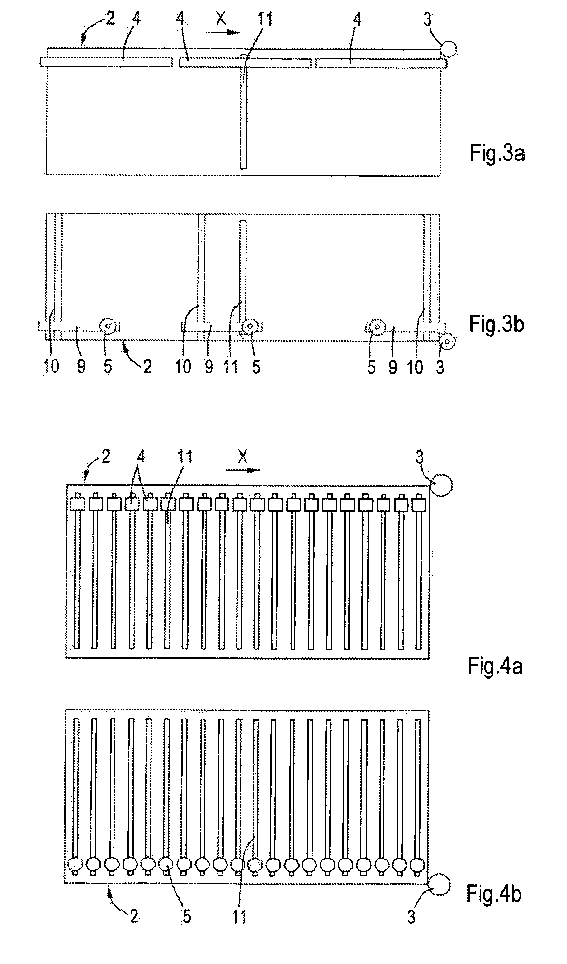

An alternative embodiment of a transport container 2 is shown in Fig. 3. In this case the transport container 2 comprises three pushing members 4. The pushing member 4 disposed in the middle of the transport container 2 is connected to the wheel support 9 through a slot 11 which extends perpendicularly to the transporting direction X.

Another alternative embodiment of a transport container 2 is shown in Fig. 4. In this case the transport container 2 comprises a plurality of pushing members 4. The supporting surface of the transport container 2 is provided with a plurality of slots 11 extending transversely with respect to the transporting direction X, through which slots 11 a mechanism for coupling the pushing members 4 to the actuator wheels 15 is present and within which the mechanism is movable. The slots 11 may also serve to guide the pushing members 4 with respect to the supporting surface of the transport container 2.

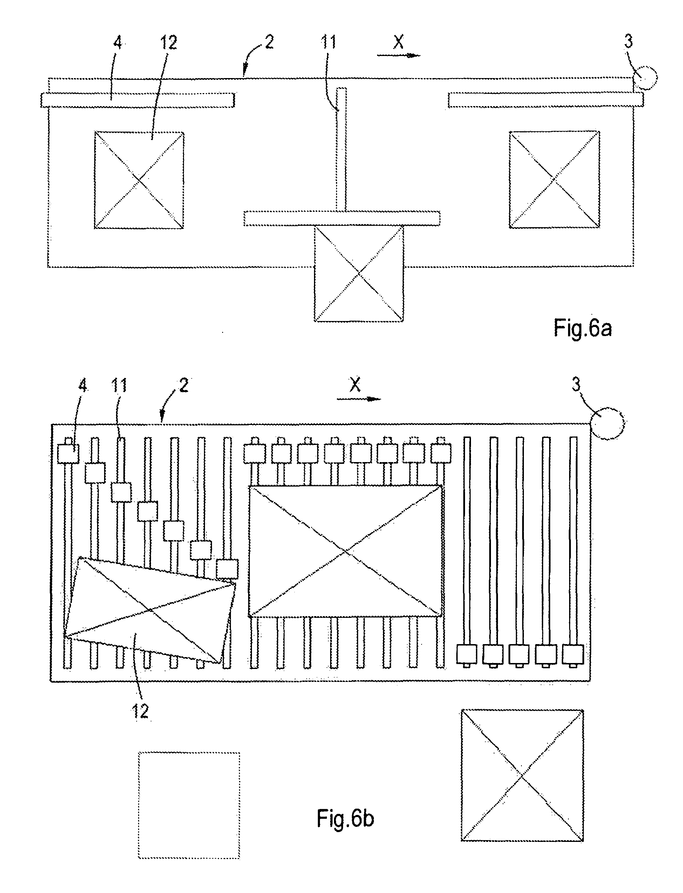

Fig. 6a and 6b show the embodiments of the transport containers 2 of Fig. 3 and 4, respectively, under operating conditions at a discharging station. Products 12 are placed on the supporting surface of the transport container 2 and pushed from the transport container 2 in transverse direction of its transporting direction X. The embodiment of Fig. 6b shows that the pushing members 4 can be activated in such a way that the orientation of a product 12 with respect to the transport container 2 can be influenced before the product 12 leaves the transport container 2 by means of activating pushing members 4 located close to each other non-synchronously. If a series of adjacent pushing members 4 are activated synchronously the distance between adjacent guide actuators 6 and between adjacent actuator wheels 5 should be similar.

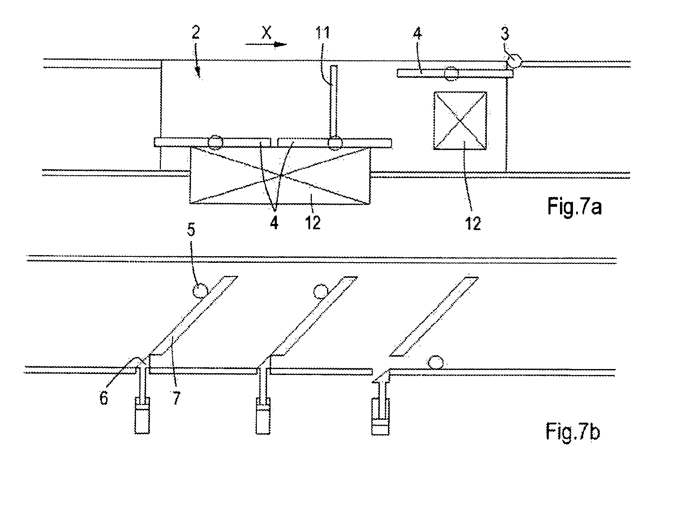

Fig. 7a shows a transport container 2 having three pushing members 4. There are two products 12 on the supporting surface of the transport container: a long product 12 and a short product 12 as seen in the transporting direction X. Fig. 7a illustrates that the long product 12 is pushed from the transport container 2 by displacing two corresponding and adjacent pushing members 4 synchronously. This is achieved by selecting the distance between two actuator wheels 5 the same as the distance between two guides 7, as seen in the transporting direction X. This can be seen in Fig. 7b. Fig. 7a and 7b also show a condition wherein the short product 12 is not discharged at this discharging station because the corresponding guide actuator 6 is not activated.

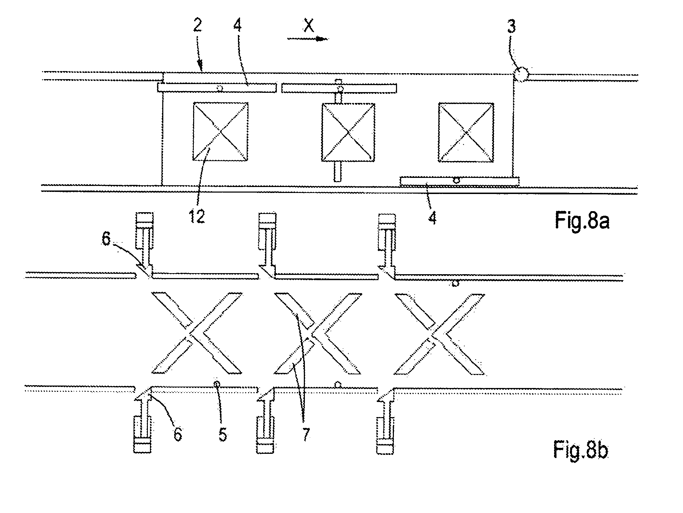

Fig. 8a and 8b illustrate an alternative embodiment of the apparatus 1 which provides the possibility to push products 12 from the transport container 2 in opposite transverse directions with respect to the transporting direction X. For this reason the guides 7 are cross shaped. In this case the discharging stations may have exits at both sides of the track which is followed by the transport containers 2. The advantage of this embodiment is that products 12 on one transport container 2 can be discharged at both sides of the track.

The transport containers 2 may comprise wheels (not shown) which are supported by and run on the frame 8 of the apparatus 1.

From the foregoing it will be clear that the apparatus according to the invention is every flexible for transporting and sorting products of varying sizes at a relatively high speed.

The invention is not limited to the embodiments shown in the drawings and described hereinbefore, which may be varied in different manners within the scope of claim and their technical equivalents. For example, the pushing members may be activated in a different way with respect to the way through actuator wheels and guides as described hereinbefore.

## Claims

1. An apparatus (1) for transport and controlled discharge of products (12), comprising at least a transport container (2) for supporting a product (12), a loading station for receiving a product (12) by the transport container (2), a discharging station for discharging the product (12) from the transport container (2) and driving means for transporting the transport container (2) in a transporting direction (X) from the loading station to the discharging station, wherein the transport container (2) comprises a pushing member (4) for transport container (2) comprises a pushing member (4) for pushing the product (12) from the transport container (2) when this is at the discharging station, which pushing member (4) is displaceable transversely with respect to the transporting direction (X), **characterized in that** the transport container (2) comprises at least another pushing member (4) for pushing the product (12) from the transport container (2) at the discharging station, wherein at least both pushing members (4) are located behind each other as seen in the transporting direction (X).

2. An apparatus (1) according to claim 1, wherein the apparatus (1) comprises a series of said transport containers (2), which are transportable by the driving means.

3. An apparatus (1) according to claim 1 or 2, wherein the pushing member (4) comprises an actuator (5) which is guidable along a guide (7) extending obliquely with respect to the transport direction (X).

4. An apparatus according to claim 3, wherein at least two actuators (5) of a transport container (2) are located at substantially the same distance with respect to each other as two corresponding guides (7), as seen in the transporting direction (X).

## Patentansprüche

1. Vorrichtung (1) zum Transport und zur gesteuerten Abgabe von Produkten (12), die mindestens einen Transportbehälter (2) zum Halten eines Produkts (12), eine Ladestation zur Aufnahme eines Produkts (12) durch den Transportbehälter (2), eine Abgabestation zur Abgabe des Produkts (12) aus dem Transportbehälter (2) und eine Antriebseinrichtung zum Transportieren des Transportbehälters (2) in eine Transportrichtung (X) von der Ladestation zur Abgabestation aufweist, wobei der Transportbehälter (2) ein Schubelement (4) zum Schieben des Produkts (12) aus dem Transportbehälter (2) aufweist, wenn sich dieser an der Abgabestation befindet, wobei das Schubelement (4) bezüglich der Transportrichtung (X) transversal verschiebbar ist, **dadurch gekennzeichnet, dass** der Transportbehälter (2) mindestens ein weiteres Schubelement (4) zum Schieben des Produkts (12) aus dem Transportbehälter (2) an der Abgabestation aufweist, wobei mindestens beide Schubelemente (4) in der Transportrichtung (X) gesehen hintereinander angeordnet sind.

2. Vorrichtung (1) nach Anspruch 1, wobei die Vorrichtung (1) eine Reihe der Transportbehälter (2) aufweist, die durch die Antriebseinrichtung transportierbar sind.

3. Vorrichtung (1) nach Anspruch 1 oder 2, wobei das Schubelement (4) ein Betätigungselement (5) aufweist, das längs einer Führung (7) führbar ist, die sich bezüglich der Transportrichtung (X) schräg erstreckt.

4. Vorrichtung nach Anspruch 3, wobei mindestens zwei Betätigungselemente (5) eines Transportbehälters (2) in der Transportrichtung (X) gesehen in im Wesentlichen demselben Abstand zueinander wie zwei entsprechende Führungen (7) angeordnet sind.

## Revendications

1. Appareil (1) pour le transport et la décharge régulée de produits (12), comprenant au moins un contenant de transport (2) pour supporter un produit (12), un poste de chargement pour faire recevoir un produit (12) par le contenant de transport (2), un poste de déchargement pour décharger le produit (12) à partir du contenant de transport (2) et des moyens d'entraînement pour transporter le contenant de transport (2) dans une direction de transport (X) du poste de chargement au poste de déchargement, dans lequel le contenant de transport (2) comprend un élément de poussée (4) pour pousser le produit (12) à partir du contenant de transport (2) lorsque celui-ci est au niveau du poste de déchargement, lequel élément de poussée (4) est déplaçable transversalement par rapport à la direction de transport (X), **caractérisée en ce que** le contenant de transport (2) comprend au moins un autre élément de poussée (4) pour pousser le produit (12) à partir du contenant de transport (2) au niveau du poste de déchargement, dans lequel au moins les deux éléments de poussée (4) sont positionnés l'un derrière l'autre en vue dans la direction de transport (X).

2. Appareil (1) selon la revendication 1, dans lequel l'appareil (1) comprend une série desdits contenants de transport (2), qui sont transportables par les moyens d'entraînement.

3. Appareil (1) selon la revendication 1 ou 2, dans lequel l'élément de poussée (4) comprend un actionneur (5) qui peut être guidé le long d'un guidage (7) s'étendant obliquement par rapport à la direction de transport (X).

4. Appareil selon la revendication 3, dans lequel au moins deux actionneurs (5) d'un contenant de transport (2) sont positionnés à une distance sensiblement identique l'un par rapport à l'autre sous forme de deux guides correspondants (7), en vue dans la direction de transport (X).
